# FASCICULE DE BREVET EUROPEEN

(11) **EP 4 111 226 B1**
(45) Date de publication et mention de la délivrance du brevet: **10.04.2024**
(21) Numéro de dépôt: 21706276.9
(22) Date de dépôt: 22.02.2021
(51) Int. Cl.: G01S 5/16, G01C 21/28

(54) **PROCEDE DE CORRECTION DE LA TRAJECTOIRE D'UN VEHICULE ET CALCULATEUR ASSOCIE**
VERFAHREN ZUR KORREKTUR DES WEGES EINES FAHRZEUGS UND ZUGEHÖRIGER RECHNER
METHOD FOR CORRECTING THE PATH OF A VEHICLE, AND ASSOCIATED COMPUTER

(30) Priorité: 25.02.2020 FR 2001830
(43) Date de publication de la demande: 04.01.2023
(73) Titulaire: Continental Automotive Technologies GmbH, 30165 Hannover (DE)
(72) Inventeur: VIGNEAU, Willy, 31100 TOULOUSE (FR); ROLLET, Benjamin, 31100 TOULOUSE (FR)
(74) Mandataire: Continental Corporation France
(86) Numéro de dépôt international: PCT/EP2021/054268
(87) Numéro de publication internationale: WO 2021/170519

(56) Documents cités:
- US-A1- 2019 302 801
- TERESA A VIDAL-CALLEJA ET AL: "Large scale multiple robot visual mapping with heterogeneous landmarks in semi-structured terrain", ROBOTICS AND AUTONOMOUS SYSTEMS, ELSEVIER BV, AMSTERDAM, NL, vol. 59, no. 9, 24 mai 2011 (2011-05-24), pages 654-674, XP028099999, ISSN: 0921-8890, DOI: 10.1016/J.ROBOT.2011.05.008 [extrait le 2011-06-01]
- DO HAGGI ET AL: "Robust Loop Closure Selection for Multi-robot Mapping Under Perceptual Aliasing", 2019 19TH INTERNATIONAL CONFERENCE ON CONTROL, AUTOMATION AND SYSTEMS (ICCAS), INSTITUTE OF CONTROL, ROBOTICS AND SYSTEMS - ICROS, 15 octobre 2019 (2019-10-15), pages 475-479, XP033699102, DOI: 10.23919/ICCAS47443.2019.8971529
- BRESSON GUILLAUME ET AL: "Simultaneous Localization and Mapping: A Survey of Current Trends in Autonomous Driving", IEEE TRANSACTIONS ON INTELLIGENT VEHICLES, IEEE, vol. 2, no. 3, 1 septembre 2017 (2017-09-01), pages 194-220, XP011672646, ISSN: 2379-8858, DOI: 10.1109/TIV.2017.2749181 [extrait le 2017-10-31]

## Description

### Domaine technique

L'invention concerne le domaine de la localisation de véhicules, de routes et d'éléments d'infrastructure dans un repère de type GNSS.

### Technique antérieure

La localisation absolue d'un dispositif, notamment d'un véhicule, se fait actuellement à l'aide d'un signal GPS (Global Positioning System) avec une précision de l'ordre de 10 à 15 mètres. Cette précision est insuffisante lorsque l'on considère des applications telles que la conduite de véhicules autonomes, par exemple, pour lesquelles une meilleure précision de localisation des routes, infrastructures et véhicules est souhaitée.

La demande de brevet FR1873074 déposée le 17 décembre 2018 au nom de la déposante décrit une méthode permettant d'améliorer la localisation d'un dispositif se déplaçant dans un repère de coordonnées GNSS tel un véhicule. Pour ce faire, on utilise un procédé de localisation et de cartographie simultanée connu de l'homme du métier dans le domaine de la robotique pour déterminer dans un repère relatif les différentes positions successives du dispositif avec une précision supérieure à celle donnée par le signal GNSS.

Ce procédé ne permettant d'obtenir que des positions relatives, on associe à chacune de ces positions une position absolue correspondant à la position GNSS du véhicule puis on corrige la position absolue du véhicule grâce aux données fournies par le procédé de localisation et de cartographie simultanée. Une méthode exposée dans la demande prend en compte la localisation dans le repère GNSS de différents objets tels que des feux de signalisation, des bus ou des véhicules détectés par le procédé de localisation et de cartographie simultanée et les utilise pour déterminer une position absolue corrigée du véhicule. Cependant, cette méthode nécessite de connaître la position absolue des objets détectés se trouvant à proximité du dispositif.

La méthode exposée dans cette demande permet donc d'obtenir une localisation plus précise du véhicule en temps quasi réel, c'est-à-dire de manière régulière lors du déplacement du véhicule.

Cependant, l'utilisation d'un procédé de localisation et de cartographie simultanée présente des inconvénients. En effet, chaque position successive du véhicule dans le repère relatif est déterminée par rapport à la position précédente du véhicule. Ainsi, au fur et à mesure que le dispositif se déplace, les erreurs s'accumulent. Une méthode permettant de corriger ces erreurs est de mettre en oeuvre un algorithme de fermeture de boucle (« loop closure » en anglais). Lorsque le procédé de localisation et de cartographie simultanée détecte, lors du déplacement du véhicule, que celui-ci est de nouveau à proximité d'un même objet, il modifie la trajectoire du véhicule de sorte que les deux positions de cet objet obtenues lors des deux passages à proximité de celui-ci correspondent. Un exemple d'implémentation d'un algorithme de fermeture de boucle est décrit dans le document « Tocards a robust back-end for pose-graph SLAM », N. Sünderhauf et P. Protzel, 2012 IEEE International Conférence on Robotics and Automation. Malheureusement, il est rare qu'un véhicule repasse à proximité d'un même objet.

Le document "Large scale multiple robot visual mapping with heterogeneous landmarks in semi-structured terrain", T. A. Vidal-Calleja et al., Robotics and Autonomous Systems, vol. 59, no. 9, 24 mai 2011, pages 654-674, décrit un SLAM multi-robot. À certains moments (par exemple à la réception d'une position GPS), une nouvelle carte locale des points de repère est générée avec la position et orientation du robot agissant comme un nouveau cadre de référence local. Le niveau global est représenté sous la forme d'un graphe d'adjacence dans lequel les origines des cartes locales dans le cadre de référence absolu sont des noeuds et les liens entre eux sont des transformations relatives. Tout cycle apparaissant dans le graphe global défini par la concaténation de chaque graphe de robot est une fermeture de boucle.

La demande de brevet US 2019/302801 A1 divulgue la correction de la trajectoire d'un véhicule sur la base des informations de trajectoire d'une pluralité de véhicules et de l'identification de points de repère communs (par exemple, des croisements de routes). Les informations sur la trajectoire comprennent des informations sur la pose ou le mouvement du véhicule, des données géométriques sur l'environnement et les positions absolues du véhicule. Une procédure de fermeture de boucle est appliquée pour les points de repère communs à au moins deux véhicules.

### Exposé de l'invention

L'invention a pour but notamment de pallier les inconvénients de l'art antérieur décrits ci-avant.

En particulier, un but de l'invention est de permettre une localisation d'un véhicule avec une précision supérieure à celle actuellement obtenue à l'aide d'un signal GPS.

Un autre but de l'invention est de pouvoir corriger la trajectoire d'un dispositif dans un repère absolu à l'aide d'un procédé de localisation et de cartographie simultanée en l'absence de données concernant la position absolue des objets détectés par le procédé.

Un autre but de l'invention est de pouvoir mettre en oeuvre un algorithme de fermeture de boucle même lorsque le véhicule ne repasse pas à proximité d'un même objet.

Un autre but de l'invention est de pouvoir déterminer la position absolue d'éléments d'infrastructure afin de pouvoir enrichir des cartes utilisées pour la navigation de véhicules autonomes.

Selon un aspect, il est proposé un calculateur électronique selon la revendication 1.

La prise en compte d'un descripteur de l'élément d'infrastructure croisé permet de lever des ambiguïtés lors de l'identification des éléments d'infrastructure correspondant à un même élément d'infrastructure, appelé élément d'infrastructure commun. D'autres informations complémentaires comprises dans la signature peuvent également être prises en compte afin de fiabiliser encore l'identification. Il peut s'agir par exemple d'autres éléments d'infrastructure présents sur l'acquisition comprenant l'élément d'infrastructure croisé. Lorsque les acquisitions sont faites par une caméra, il peut s'agir d'un bus identifiable croisé sur la trajectoire et dont on peut évaluer la position absolue en fonction du moment où il a été aperçu. Il peut également s'agir d'informations concernant l'état d'un feu de signalisation, au moment de l'acquisition et en particulier, des instants auxquels un feu change de phase.

Selon un autre aspect, il est proposé un procédé de correction de la trajectoire d'un véhicule dans un repère relatif lui étant associé, selon la revendication 5.

Selon un autre aspect, il est proposé un programme informatique selon la revendication 9.

Les revendications dépendantes définissent des modes de réalisation préférés.

Il est ainsi possible de corriger de manière ciblée les portions de trajectoire sélectionnées des différents véhicules et de ne pas recourir à une approche globale telle que l'ajustement de faisceaux.

Dans un mode de réalisation, le calculateur reçoit également une pluralité de poses, chaque pose comprenant une position et une orientation du véhicule dans un repère relatif et l'algorithme d'optimisation de graphe est un algorithme d'optimisation de graphe de pose connu de l'homme de l'art.

Ainsi, on corrige d'abord la trajectoire des véhicules sur de grandes distances puis on corrige ensuite la trajectoire des véhicules sur d'autres boucles plus petites. Les fermetures de boucle sur des grandes distances auront plus d'impact sur la correction de chaque portion de trajectoire sélectionnée. En effet, chaque position successive d'une portion de trajectoire sélectionnée sera corrigée pour minimiser l'erreur globale résultant de l'accumulation des erreurs sur les premières transformations. Par la suite, en réduisant les tailles de boucle, on obtient une correction des trajectoires plus locale autour des éléments d'infrastructure communs.

Dans le cadre de la présente demande, la longueur d'une boucle correspond à la somme des longueurs des portions de trajectoire sélectionnées pour former la boucle considérée.

Ainsi, pour une longueur de boucle minimale donnée, les boucles impliquent le moins de véhicules possibles. On limite alors le nombre d'éléments d'infrastructure communs impliqués dans la boucle et l'impact d'une mauvaise identification des éléments d'infrastructures croisés sur les trajectoires de ces véhicules.

### Brève description des dessins

D'autres caractéristiques, détails et avantages de l'invention apparaîtront à la lecture de la description détaillée ci-après, et à l'analyse des dessins annexés, sur lesquels :
**Fig. 1**

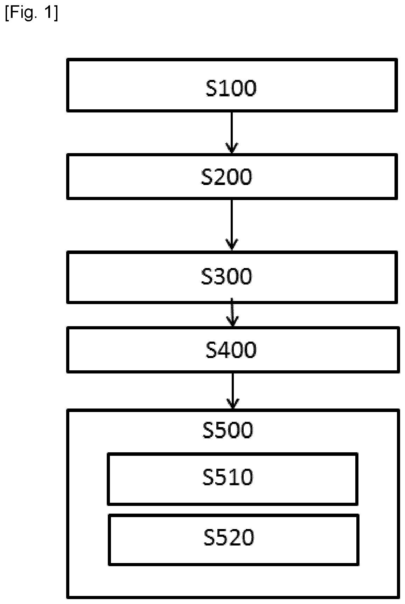

   [Fig. 1] représente le procédé de correction de la trajectoire d'un véhicule, dans un repère de coordonnées GNSS;
**Fig. 2**

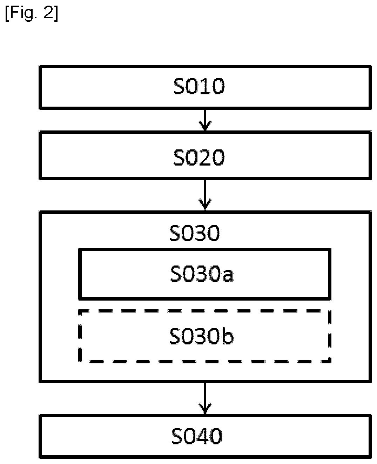

   [Fig. 2] représente des étapes mises en oeuvre par le calculateur d'un véhicule pour envoyer les données reçues dans une étape du procédé de la figure 1;
**Fig. 3**

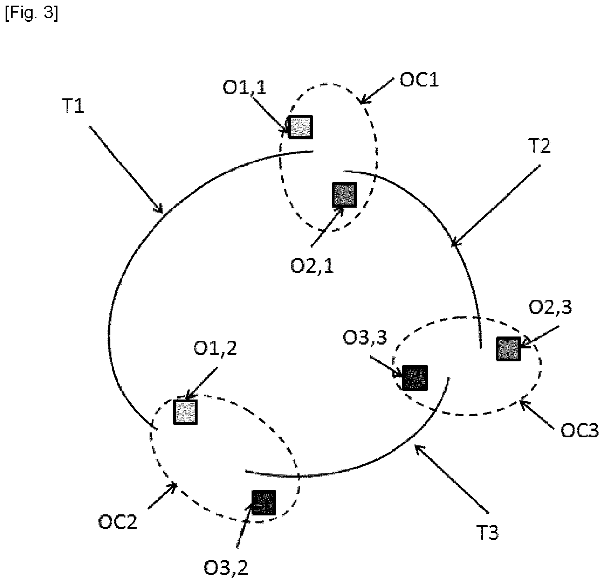

   [Fig. 3] illustre de manière schématique un exemple de boucle formée par sélection de portions de trajectoire selon une étape du procédé de la figure 1 ;
**Fig. 4**

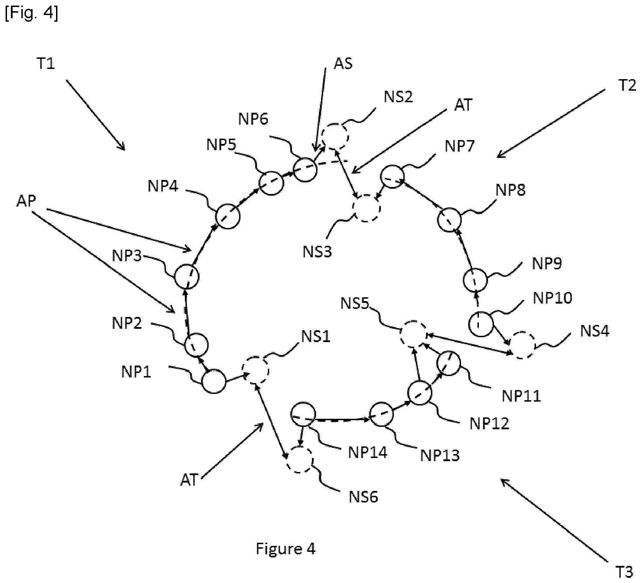

   [Fig. 4] illustre un exemple de graphe créé pour la boucle de la figure 3 selon une étape du procédé de la figure 1 ;
**Fig. 5**

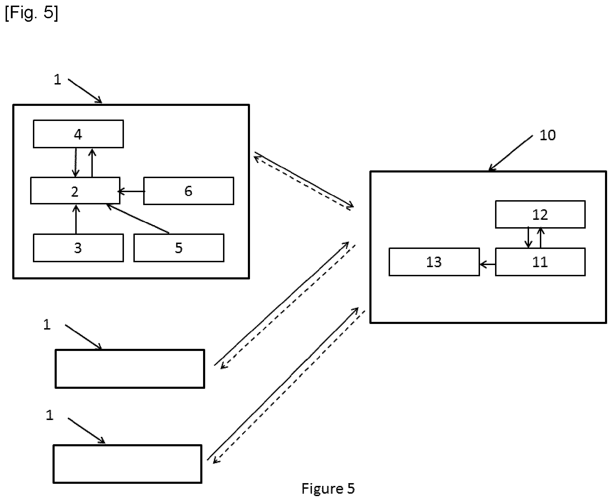

   [Fig. 5] illustre un système pouvant être utilisé pour mettre en oeuvre les procédés de la figure 1 et de la figure 2.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Il est maintenant fait référence à la figure 1.

La figure 1 représente le procédé de correction de la trajectoire d'un véhicule dans un repère de coordonnées GNSS. Le procédé est mis en oeuvre par un calculateur central 11 distant du ou des véhicules 1 échangeant des données avec celui-ci.

Le procédé comprend une étape S100 de réception de données provenant d'une pluralité de véhicules, une étape S200 de réception, pour chaque élément d'infrastructure croisé par un véhicule, d'une signature comprenant un descripteur caractérisant l'élément d'infrastructure croisé, une étape S300 d'identification d'éléments d'infrastructure croisés par chaque véhicule correspondant à un élément d'infrastructure commun, une étape S400 de sélection de portions de trajectoires d'au moins deux véhicules de façon à former une boucle entre au moins deux éléments d'infrastructure communs distincts et une étape S500 de mise en oeuvre d'un algorithme de fermeture de boucle sur ladite boucle de manière à corriger la position absolue de chaque véhicule sur les portions de trajectoires sélectionnées.

L'étape S100 est une étape de réception, pour une pluralité de véhicules, de données permettant de déterminer des positions successives de chaque véhicule et de chaque élément d'infrastructure dans un repère relatif et des positions absolues correspondant aux positions successives du véhicule dans un repère de coordonnées GNSS.

En particulier, l'étape S100 comprend la réception de données obtenues notamment par la mise en oeuvre d'un procédé de localisation et de cartographie simultanée à partir d'acquisitions de l'environnement du véhicule faites par un capteur comprenant, pour chaque véhicule et pour une pluralité de positions successives d'un véhicule :
* une pluralité de transformations de repère du véhicule représentatives d'un changement de position et d'orientation relative du véhicule entre deux positions successives respectives,
* une pluralité de transformations de la position d'un élément d'infrastructure routière croisé par le véhicule dans le repère du véhicule, représentatives de la variation de la position de l'élément d'infrastructure croisé par le véhicule, dans le repère du véhicule, entre deux déplacements successifs du véhicule, et
* une pluralité de positions absolues du véhicule dans un repère de coordonnées GNSS correspondant aux positions successives du véhicule, la pluralité de positions absolues formant la trajectoire du véhicule.

En d'autres termes, les transformations de repère du véhicule permettent de déterminer une position et une orientation du véhicule à partir d'une position et d'une orientation initiales du véhicule associée. Les transformations de la position d'un élément d'infrastructure routière permettent de déterminer au moins la position d'un élément d'infrastructure routière à partir de la position et de l'orientation relative du véhicule associé.

Dans un mode de réalisation, les transformations de repère du véhicule comprennent des transformations de translation et de rotation. Les transformations de la position d'un élément d'infrastructure routière comprennent au moins des transformations de translation et de manière optionnelle des transformations de rotations.

L'étape S200 comprend la réception, pour chaque élément d'infrastructure croisé par un véhicule, d'une signature comprenant un descripteur de l'élément d'infrastructure. Cette signature est utilisée pour associer différents éléments d'infrastructures correspondants à des éléments d'infrastructure communs et comprend un descripteur du type d'élément d'infrastructure croisé. Cette signature peut comprendre des informations supplémentaires comme :
- des types d'éléments d'infrastructure se trouvant à proximité immédiate de l'élément d'infrastructure considéré, et avantageusement, en cas d'incertitude,
- des informations de contexte concernant par exemple :
   * un bus identifiable qui serait passé à proximité, par exemple dans le champ de vision de la caméra,
   * les phases d'un feu se trouvant à proximité, par exemple dans le champ de vision de la caméra.

Le procédé de la figure 2 illustre l'ensemble des étapes mises en oeuvre par le calculateur 2 d'un véhicule 1 pour envoyer les données reçues par un calculateur central 11 mettant en oeuvre le procédé de la figure 1.

Ce procédé comprend une étape S010 d'acquisition, une étape S020 de traitement et une étape S030 de préparation et de sélection de données à envoyer au calculateur central et une étape S040 d'envoi de ces données au calculateur central.

L'étape S010 comprend l'acquisition avec un capteur de l'environnement du véhicule pour plusieurs positions successives sur sa trajectoire et l'acquisition de la position GNSS correspondante.

L'étape S020 de traitement comprend la mise en oeuvre d'un procédé de localisation et de cartographie simultanée pour déterminer notamment des transformations de repère du véhicule représentatives d'un changement de position et d'orientation relative du véhicule entre deux positions successives respectives et des transformations de positionnement relatif d'un objet, qui peut être par la suite identifié comme un élément d'infrastructure routière, représentatives de la position et optionnellement de l'orientation d'un élément d'infrastructure.

Lors de la mise en oeuvre d'un procédé de localisation et de cartographie simultanée connu de l'homme de l'art, la trajectoire d'un véhicule dans un repère relatif est reconstruite à partir d'acquisitions faites par un capteur de l'environnement du véhicule pour différentes positions successives. Un tel procédé est décrit par exemple dans l'article « ORB-SLAM: A Versatile and Accurate Monocular SLAM System », Raul Mur-Artal et al., IEEE Transactions on robotics, October 2015.

En particulier, les acquisitions comprenant des signaux représentatifs d'un objet vu par le véhicule sur plusieurs positions successives sur sa trajectoire sont utilisées pour déterminer les transformations de repère du véhicule, qui permettent de déterminer un déplacement relatif du véhicule entre deux positions successives et un changement d'orientation du véhicule, et les transformations de position d'un objet, qui permettent de déterminer la position de l'objet par rapport au véhicule et éventuellement l'orientation relative de l'objet par rapport au véhicule.

Les différentes positions successives du véhicule et son orientation sont déterminées dans un repère relatif. Habituellement, la première position du véhicule définit le point d'origine du repère relatif et une orientation de référence du dispositif. Les positions et orientations successives du véhicule, appelées poses, sont alors déterminées à partir des transformations de repère du véhicule et de la pose précédente du véhicule.

Le procédé de localisation et de cartographie simultanée comprend un algorithme de reconnaissance d'objet configuré pour détecter si des acquisitions successives comprennent des signaux représentatifs d'un même objet.

Avantageusement, l'algorithme de reconnaissance d'objet est également configuré pour reconnaitre si l'objet détecté est un élément d'infrastructure tel un panneau de signalisation ou un feu de signalisation par exemple.

Avantageusement, lorsqu'un élément d'infrastructure est détecté, l'étape S020 comprend la détermination du type d'élément d'infrastructure détecté à partir d'acquisitions comprenant des signaux représentatifs de l'élément d'infrastructure, et l'attribution d'un descripteur à cet élément d'infrastructure. Le descripteur pourra être utilisé par la suite lors de l'étape S300 pour identifier des éléments d'infrastructure identiques ayant des positions absolues différentes mais correspondant à un élément d'infrastructure commun.

Par ailleurs, dans un mode de réalisation, des informations complémentaires peuvent être collectées comme par exemple, la présence d'autres éléments d'infrastructure ou le passage d'un bus identifiable sur l'acquisition comprenant l'élément d'infrastructure détecté ou, si l'élément d'infrastructure est un feu de signalisation, l'état (allumé, éteint ou changement de phase par exemple) éventuellement associé à la couleur du feu correspondant. Ces informations complémentaires, associées au descripteur du type d'élément d'infrastructure détecté forment la signature de l'élément d'infrastructure détecté et peuvent être utilisées dans l'étape S300 qui sera décrite ultérieurement en référence à la figure 1.

L'étape S030 comprend une étape de préparation et de sélection des données à envoyer au calculateur central 11. Avantageusement, les données relatives aux objets qui ne sont pas des éléments d'infrastructure ne sont pas prises en compte. L'étape S030 comprend donc une sous-étape S030a de sélection des transformations de position d'un objet correspondant à des éléments d'infrastructure, de sélection de la position absolue respective du véhicule et éventuellement de sélection de la signature associée à chaque élément d'infrastructure. Par ailleurs, afin de limiter le volume de données à transmettre, seule une partie des positions successives du véhicule sur sa trajectoire peuvent être considérées. Ainsi, l'étape S030 comprend de manière optionnelle une sous-étape S030b de sélection des transformations de repère du véhicule à envoyer et de positions absolues du véhicule respectives. Ainsi, de manière avantageuse, seule une sélection des transformations de trajectoire du véhicule et les transformations de position d'un objet correspondant à un élément d'infrastructure routière sont alors considérées.

Dans le reste de la demande, on utilisera l'expression « transformation de positionnement relatif d'un élément d'infrastructure routière » pour faire référence aux transformations de positionnement relatif d'objets identifiés comme correspondant à des éléments d'infrastructure routière.

Dans un mode de réalisation, les transformations de repère du véhicule et de positionnement relatif d'un élément d'infrastructure sont envoyées, sous forme de matrices de transformations homogènes, au calculateur central et les poses correspondant aux positions et orientations successives du véhicule entre deux transformations de repère sélectionnées comprennent un facteur d'échelle. Les poses sont donc exprimées dans un repère de coordonnées homogènes.

L'étape S040 permet d'envoyer ces données au calculateur central qui les reçoit lors de l'étape S100 illustrée en référence à la figure 1.

Ainsi, dans un mode de réalisation préféré, une pluralité de poses correspondant à des positions et à des orientations successives du véhicule, de transformations de repère du véhicule représentatives d'un changement de position et d'orientation entre deux de ces positions successives et de transformation de position d'un élément d'infrastructure représentatives de la position relative d'un élément d'infrastructure routière croisé par le véhicule par rapport à une position respective du véhicule sont reçues lors de l'étape S100.L'étape S300 comprend l'identification, à partir des positions absolues de chaque véhicule et des signatures des éléments d'infrastructure croisés par chaque véhicule, d'éléments d'infrastructure correspondant à un même élément d'infrastructure, i.e. d'éléments d'infrastructure communs. En particulier, on regarde si des véhicules ont eu des positions absolues proches les unes des autres et si des éléments d'infrastructure ont été croisés par ces véhicules à proximité. On identifie ensuite, à partir des signatures des éléments d'infrastructure, des éléments d'infrastructure communs.

En cas d'incertitude, notamment lorsque plusieurs éléments d'infrastructure sont détectés ou croisés par un véhicule à courte distance, d'autres informations contenues dans la signature de chaque élément d'infrastructure croisé peuvent être prises en compte en supplément des descripteurs des éléments d'infrastructure croisés. Par exemple, on vérifie si des éléments d'infrastructure ont le même descripteur et si la signature d'un élément d'infrastructure comprend les mêmes éléments d'infrastructure placés à proximité. Par exemple, le fait d'avoir croisé un bus identifiable à un instant donné est un évènement permettant de lever une ambiguïté sur l'association d'un élément d'infrastructure croisé.

Selon un autre exemple, s'il existe plusieurs feux très proches les uns des autres sur une trajectoire d'un véhicule, l'information selon laquelle un feu serait passé au rouge à un instant donné peut permettre de discriminer un feu par rapport à un autre pour peu que l'on ait accès à une base de données comprenant des informations concernant les phases des feux de signalisation et leur position absolue.

Dans un mode de réalisation, on attribue à chaque élément d'infrastructure croisé sur la trajectoire d'un véhicule correspondant à un élément d'infrastructure commun un identifiant commun.

L'étape S400 comprend la sélection de portions de trajectoires d'au moins deux véhicules, chaque portion de trajectoire étant définie par deux éléments d'infrastructure croisés par un véhicule, un élément d'infrastructure étant commun à deux portions de trajectoire consécutives correspondant à deux véhicules distincts de façon à former une boucle. Une boucle est ainsi formée par des portions de trajectoire de véhicules distincts entre au moins deux éléments d'infrastructure communs.

La figure 3 illustre de manière schématique et à titre d'exemple une boucle formée à partir de trois portions de trajectoire T1, T2, T3 de trois véhicules. Chaque portion de trajectoire T1, T2, T3 s'étend entre deux éléments d'infrastructure distincts croisés par chaque véhicule O1,1, O1,2 ; O2,1, O2,3 et O3,2 ;O3,3 respectivement. Les éléments d'infrastructure O1,1 et O2,1 ont un identifiant identique et ont donc été identifiés comme correspondant à un élément d'infrastructure commun OC1. Les éléments d'infrastructure O1,2 et O3,2 ont aussi un identifiant identique et ont été identifiés comme correspondant à un élément d'infrastructure commun OC2. Enfin, les éléments d'infrastructure O3,3 et O2,3 ont un identifiant identique et ont été identifiés comme correspondant à un élément d'infrastructure commun OC3.

L'étape S500 comprend la mise en oeuvre d'un algorithme de fermeture de boucle sur la boucle formée par les portions de trajectoire sélectionnées de manière à corriger la position relative de chaque véhicule sur les portions de trajectoire sélectionnées.

En particulier, la fermeture de boucle permet de corriger la valeur des transformations de repère de véhicule et de position des éléments d'infrastructure ainsi que la position et l'orientation du véhicule dans le repère relatif qui lui est associé.

Dans un mode de réalisation, la fermeture de boucle est réalisée en prenant en compte, pour chaque portion de trajectoire sélectionnée, les poses successives du véhicule sur sa trajectoire (décrites par les transformations relatives de repère du véhicule) et les transformations de position de l'élément d'infrastructure relatives aux deux éléments d'infrastructure distincts respectifs et en définissant des contraintes sur les positions dans le repère relatif des éléments d'infrastructure communs, c'est-à-dire ayant un identifiant identique dans le mode de réalisation décrit ici, de sorte que deux éléments d'infrastructure croisés par deux véhicules sur deux portions de trajectoire respectives et correspondant à un élément d'infrastructure commun aient la même position dans le repère relatif.

La fermeture de boucle est donc réalisée sur plusieurs portions des trajectoires relatives des différents véhicules, afin de corriger la position de chaque véhicule sur la portion de trajectoire correspondante dans le repère relatif.

Il est alors possible de corriger l'ensemble des positions GNSS d'un véhicule sur sa trajectoire en cherchant la meilleure superposition entre la trajectoire du véhicule en coordonnées GNSS avec la trajectoire du véhicule dans le repère relatif. On peut par exemple utiliser un algorithme de type ICP (Iterative Closest Point) afin de déterminer la transformation de repère à effectuer sur les positions du dispositif dans le repère relatif afin d'obtenir les positions corrigées du véhicule dans le repère GNSS. On réduit ainsi l'erreur sur l'estimation initiale de la trajectoire du dispositif obtenue par réception d'un signal GNSS.

Par ailleurs, la position des éléments d'infrastructure routière dans le repère relatif est également corrigée par la mise en oeuvre de l'algorithme de fermeture de boucle. Ainsi, en appliquant la transformation de repère obtenue grâce à l'algorithme d'ICP sur les positions des éléments d'infrastructure dans le repère relatif, il est possible d'obtenir des positions absolues des éléments d'infrastructure en coordonnées GNSS. Ces positions peuvent être gardées en mémoire avec le descripteur du type d'élément d'infrastructure correspondant afin d'enrichir une base de données d'éléments d'infrastructure.

Dans un mode de réalisation, la position absolue des deux éléments d'infrastructure croisés sur chaque portion de trajectoire sélectionnée est déterminée soit à partir de la position absolue du véhicule et de la transformation de position de l'élément d'infrastructure correspondante soit par consultation d'une base de données comme décrit précédemment.

Dans un mode de réalisation, l'algorithme de fermeture de boucle comprend l'implémentation d'un algorithme d'optimisation de graphes.

L'étape S500 comprend alors une sous-étape S510 de création d'un graphe tel qu'illustré sur la figure 4 et comprenant :
* des premiers noeuds NP1 à NP14 comprenant au moins les positions absolues des véhicules sur les portions de trajectoire T1, T2, T3 sélectionnées,
* des premières arrêtes AP reliant deux premiers noeuds successifs NPj-1 NPj d'un même véhicule et comprenant des premières transformations respectives représentatives d'un changement de position relative du véhicule entre les deux premiers noeuds,
* des seconds noeuds NS1, NS2, NS3, NS4, NS5, NS6 comprenant au moins les positions absolues des éléments d'infrastructure O1,2, O1,1; O2,1, O2,3, O3,3, O3,2 respectivement, croisés par chaque véhicule sur la portion de trajectoire sélectionnée correspondante,
* des secondes arrêtes AS reliant un premier noeud NP à un second noeud NS, par exemple NP6 à NS2, et comprenant des secondes transformations représentatives de la position relative de l'élément d'infrastructure O1,1, du second noeud NP6 par rapport à la position du véhicule du premier noeud, ici NP6, et
* des troisièmes arrêtes AT reliant deux seconds noeuds, par exemple NS2 et NS3, correspondant à des éléments d'infrastructure croisés par deux véhicules sur leurs portions de trajectoires respectives, ici T1 et T2, correspondant à un même élément d'infrastructure, ici OC1, et définissant une contrainte selon laquelle la position de ces deux second noeuds doit être la même.

Dans un mode de réalisation préféré, les premiers noeuds comprennent les positions et les orientations relatives du véhicule obtenues à partir des poses du véhicule reçues lors de l'étape S100. Les premières et les secondes arêtes comprennent respectivement les transformations de repère du véhicule et les transformations de position des éléments d'infrastructure reçues lors de l'étape S100 comme décrit précédemment. On rappelle ici que les poses du véhicule (la trajectoire obtenue par transformations successives du repère véhicule) sont obtenues par le procédé de localisation et de cartographie simultanée et permettent de déterminer un déplacement relatif et un changement d'orientation du véhicule entre deux positions successives du véhicule.

Dans un autre mode de réalisation, les premiers noeuds ne comprennent pas les orientations relatives du véhicule.

L'étape S500 comprend également une sous-étape S520 comprenant l'implémentation de l'algorithme de fermeture de boucle par optimisation de graphe sur le graphe créé de manière à corriger les positions absolues de chaque véhicule et de chaque élément d'infrastructure pour respecter les contraintes sur la position de deux seconds noeuds correspondant à un élément d'infrastructure commun définies par les troisièmes arrêtes. Les positions des premiers et seconds noeuds étant contraintes dans une moindre mesure par les valeurs des premières et secondes transformations définies par les premières et secondes arrêtes comme décrit ci-dessous.

L'optimisation de graphe est réalisée de manière à ce que l'erreur globale résultant de la différence de position absolue entre chaque paire d'éléments d'infrastructure croisés par deux véhicules différents et correspondant à un élément d'infrastructure commun soit répartie sur l'intégralité du graphe tout en minimisant les modifications de la valeur des premières et secondes transformations. Ainsi, les positions absolues contenues dans les premiers et seconds noeuds sont modifiées. On obtient alors une position absolue corrigée pour les positions successives de la trajectoire ainsi que pour les positions absolues des éléments d'infrastructure.

A l'issue de l'optimisation de graphe, la position absolue des éléments d'infrastructure contenus dans deux noeuds secondaires reliés par une troisième arrête correspondent.

Dans un mode de réalisation, les positions absolues corrigées des éléments d'infrastructure croisés ainsi que le descripteur du type d'infrastructure sont stockées dans une base de données ou une mémoire externe afin de pouvoir enrichir des cartes existantes.

Dans un mode de réalisation, l'algorithme d'optimisation de graphe est un algorithme d'optimisation de graphe de pose connu de l'homme du métier semblable à celui décrit dans le document « Efficient Estimation of Accurate Maximum Likelihood Maps in 3D», G. Giorgio et al., Proc. of the IEEE/RSJ International Conférence on Intelligent Robots and Systems (IROS), 2007.

Dans ce mode de réalisation, les premiers noeuds comprennent la pose de chaque véhicule sur sa portion de trajectoire sélectionnée, la pose de chaque véhicule comprenant la position du véhicule dans le repère GNSS au lieu de la position relative du véhicule dans le repère relatif, les premières arrêtes comprennent les transformations de repère du véhicule représentatives d'un changement de position et d'orientation relative du véhicule et les secondes arrêtes comprennent les transformations de position d'objet correspondant à des éléments d'infrastructure routière représentatives de la position relative de l'élément d'infrastructure dont la position dans le repère relatif est comprise dans le second noeud correspondant.

Dans ce mode de réalisation conforme à l'invention, au lieu d'avoir dans le graphe de poses une seule contrainte sur les positions absolues contenues dans deux seconds noeuds correspondant à un même élément d'infrastructure, on trouve plusieurs de ces contraintes pour les différents éléments d'infrastructure communs impliqués dans la boucle.

Dans un mode de réalisation, les incertitudes concernant la position absolue mesurée pour chaque véhicule et les incertitudes estimées lors de la détermination des transformations de repère du véhicule et des transformations de position d'éléments d'infrastructure routière sont prises en compte en tant que contraintes supplémentaires pour limiter les modifications des transformations de repère du véhicule et de positionnement relatif de l'élément d'infrastructure ainsi que les modifications de la position absolue du véhicule.

On notera également que les incertitudes sur la position absolue de chaque véhicule, exprimée par exemple sous la forme d'une matrice de covariance, sont mises à jour à l'issue de la mise en oeuvre de l'algorithme de fermeture de boucle et pourra être prise en compte en tant que contrainte sur la position du véhicule lorsque les étapes S400 et S500 sont réitérées pour mettre en oeuvre l'algorithme de fermeture de boucles sur d'autres boucles.

Dans un mode de réalisation préféré, les étapes S400 à S500 sont réitérées pour des boucles de longueur décroissante. Dans le cadre de la présente demande, la longueur d'une boucle correspond à la somme des longueurs des portions de trajectoire sélectionnées pour former la boucle considérée. La longueur d'une portion de trajectoire est déterminée en calculant la distance parcourue par un véhicule se déplaçant sur cette portion de trajectoire et peut être calculée en additionnant la distance entre chaque position successive du véhicule pour la portion de trajectoire considérée.

Pour ce faire, lors de la mise en oeuvre de chaque étape S400, on sélectionne des portions de trajectoire de façon à former une boucle ayant une longueur supérieure à une longueur prédéterminée, la longueur prédéterminée à atteindre pour chaque itération de l'étape S400 étant préalablement définie.

De plus, on sélectionne des portions de trajectoire de façon à former une boucle ayant une longueur supérieure à une longueur prédéterminée et pour lequel le nombre de portions de trajectoires sélectionnées est minimal.

La figure 5 illustre un système permettant de mettre en oeuvre les procédés des figures 1 et 2. Le système comprend une pluralité de véhicules 1 et un serveur 10 apte à communiquer avec la pluralité de véhicules.

Chaque véhicule 1 comporte un calculateur électronique 2, par exemple un processeur, un microprocesseur, ou un microcontrôleur, relié à au moins un capteur 3, une mémoire 4, un récepteur GNSS 5 et une interface de communication 6. Le capteur 3 permet de faire des acquisitions de l'environnement du véhicule 1 pour différentes positions du véhicule. Ces acquisitions sont utilisées pour mettre en oeuvre un procédé de localisation et de cartographie simultanée tel que décrit précédemment. Le récepteur GNSS 5 permet d'obtenir la position absolue du véhicule dans un repère de coordonnées GNSS lors des acquisitions du capteur.

Les acquisitions faites par le capteur ainsi que les positions absolues correspondantes du véhicule sont stockées dans la mémoire 4. En outre, la mémoire 4 comprend des instructions de code pour la mise en oeuvre du procédé de la figure 2. Ces instructions de code sont exécutées par le calculateur électronique 2 pour déterminer notamment les transformations de repère de véhicule et les transformations de position de l'élément d'infrastructure routière ainsi que la signature des éléments d'infrastructure croisés par le véhicule sur sa trajectoire destinés à être envoyés au serveur 10 via l'interface de communication 6.

On notera que le capteur 3 peut être une caméra, un radar, ou un lidar, par exemple. Dans une variante de réalisation, le véhicule 1 peut comprendre plusieurs capteurs parmi ceux cités précédemment et différentes variantes du procédé de localisation et de cartographie peuvent être mises en oeuvre selon que l'on utilise les acquisitions faites par un capteur ou par plusieurs capteurs. En outre, le procédé de localisation et de cartographie est apte à reconnaitre le type d'élément d'infrastructure croisé et d'autres informations permettant d'établir la signature de l'élément d'infrastructure.

Le serveur 10 comprend également un calculateur électronique 11, également appelé calculateur central, relié à au moins une mémoire 12 et une interface de communication 13 apte à communiquer avec le véhicule 1 via son interface de communication 6.

Optionnellement, le serveur 10 a accès à une base de données externe (non représentée) permettant de déterminer la position absolue d'un élément d'infrastructure à l'aide de tout ou partie de la signature de l'élément d'infrastructure et d'un indicateur d'une zone dans laquelle se trouve l'élément d'infrastructure et pouvant optionnellement être enrichie à l'aide des positions corrigées d'éléments d'infrastructures identifiés par leur type par exemple.

Les données transmises par chaque véhicule sont stockées dans la mémoire 12 qui comprend également des instructions de code pour la mise en oeuvre du procédé de la figure 1. Ces instructions de code sont exécutées par le calculateur électronique 11 pour corriger la trajectoire de véhicules sur des portions de trajectoire sélectionnées lors d'une implémentation de l'étape S400 et corrigées lors d'une implémentation de l'étape S500.

## Revendications

1. Calculateur électronique (11) configuré pour la mise en oeuvre d'un procédé de correction de la trajectoire d'un véhicule dans un repère relatif lui étant associé et comprenant les étapes suivantes:
a) la réception (S100), pour une pluralité de véhicules :
- de données comprenant, pour une pluralité de positions successives d'un véhicule sur sa trajectoire :
* une pluralité de transformations de repère du véhicule représentatives d'un changement de position et d'orientation relative du véhicule entre deux positions successives respectives,
* une pluralité de transformations de la position d'un élément d'infrastructure représentatives de la position relative d'un élément d'infrastructure croisé par le véhicule par rapport à une position respective du véhicule, et
- une pluralité de positions absolues du véhicule dans un repère de coordonnées GNSS correspondant aux positions successives du véhicule sur sa trajectoire,
b) la réception (S200), pour chaque élément d'infrastructure croisé par un véhicule, d'une signature comprenant un descripteur de l'élément d'infrastructure croisé, c) l'identification (S300), à partir des positions absolues de chaque véhicule et des signatures d'éléments d'infrastructure croisés par chaque véhicule, d'éléments d'infrastructure communs,
d) la sélection de portions de trajectoires d'au moins deux véhicules (S400), chaque portion de trajectoire étant définie par deux éléments d'infrastructure croisés par un véhicule, un élément d'infrastructure étant commun à deux portions de trajectoire consécutives correspondant à deux véhicules distincts de façon à former une boucle ayant une longueur supérieure à une longueur prédéterminée et pour lequel le nombre de portions de trajectoires sélectionnées est minimal,
e) la mise en oeuvre d'un algorithme de fermeture de boucle (S500) sur la boucle formée par les portions de trajectoire sélectionnées de manière à corriger la trajectoire de chaque véhicule dans le repère relatif qui lui est associé, sur les portions de trajectoire sélectionnées.

2. Calculateur (11) selon la revendication 1, dans lequel la fermeture de boucle est réalisée en prenant en compte, pour chaque portion de trajectoire sélectionnée, des positions et des orientations du véhicule dans un repère relatif qui lui est associé, des transformations de repère du véhicule respectives et des transformations de la position d'un élément d'infrastructure relatives aux deux éléments d'infrastructure distincts respectifs et en définissant des contraintes sur les positions des éléments d'infrastructure communs de sorte que deux éléments d'infrastructure croisés par deux véhicules sur deux portions de trajectoire respectives et correspondant à un élément d'infrastructure commun aient la même position.

3. Calculateur (11) selon l'une quelconque des revendications précédentes, dans lequel l'algorithme de fermeture de boucle comprend l'implémentation d'un algorithme d'optimisation de graphes et l'étape e) comprend :
- la création d'un graphe (S510) comprenant :
* des premiers noeuds comprenant des poses comprenant des positions et des orientations des véhicules dans leurs repères respectifs sur les portions de trajectoire sélectionnées,
* des premières arrêtes reliant deux premiers noeuds successifs d'un même véhicule et comprenant des transformations de repère du véhicule respectives représentatives d'un changement de position et d'orientation relative du véhicule entre les deux premiers noeuds,
* des seconds noeuds comprenant les positions des éléments d'infrastructure croisés par chaque véhicule sur la portion de trajectoire sélectionnée correspondante dans le repère relatif associé au véhicule,
* des secondes arrêtes reliant un premier noeud à un second noeud et comprenant des transformations de position d'un élément d'infrastructure représentatives de la position relative de l'élément d'infrastructure du second noeud par rapport à la position du véhicule du premier noeud, et
* des troisièmes arrêtes reliant deux seconds noeuds correspondant à un élément d'infrastructure commun et définissant une contrainte selon laquelle la position contenue dans ces deux second noeuds doit être la même, et
- l'implémentation de l'algorithme de fermeture de boucle par optimisation de graphe sur le graphe créé (S520) de manière à corriger les positions de chaque véhicule et de chaque élément d'infrastructure dans le repère relatif pour respecter les contraintes sur la position contenue dans les deux seconds noeuds correspondant à un élément d'infrastructure commun définies par les troisièmes arrêtes.

4. Calculateur (11) selon l'une quelconque des revendications 1 à 3, configuré pour réitérer l'ensemble des étapes d) à e) pour des boucles de longueur décroissante.

5. Procédé de correction de la trajectoire d'un véhicule dans un repère relatif lui étant associé, mis en oeuvre par un calculateur électronique et comprenant :
a) la réception (S100), pour une pluralité de véhicules :
- de données comprenant, pour une pluralité de positions successives d'un véhicule sur sa trajectoire :
* une pluralité de transformations de repère du véhicule représentatives d'un changement de position et d'orientation relative du véhicule entre deux positions successives respectives,
* une pluralité de transformations de la position d'un élément d'infrastructure croisé par le véhicule par rapport à une position respective du véhicule, et
- une pluralité de positions absolues du véhicule dans un repère de coordonnées GNSS correspondant aux positions successives du véhicule sur sa trajectoire,
b) la réception (S200), pour chaque élément d'infrastructure croisé par un véhicule, d'une signature comprenant un descripteur de l'élément d'infrastructure croisé,
c) l'identification (S300), à partir des positions absolues de chaque véhicule et des signatures d'éléments d'infrastructure croisés par chaque véhicule, d'éléments d'infrastructure communs,
d) la sélection de portions de trajectoires d'au moins deux véhicules (S400), chaque portion de trajectoire étant définie par deux éléments d'infrastructure croisés par un véhicule, un élément d'infrastructure étant commun à deux portions de trajectoire consécutives correspondant à deux véhicules distincts de façon à former une boucle ayant une longueur supérieure à une longueur prédéterminée et pour lequel le nombre de portions de trajectoires sélectionnées est minimal,
e) la mise en oeuvre d'un algorithme de fermeture de boucle (S500) sur la boucle formée par les portions de trajectoire sélectionnées de manière à corriger la trajectoire dans le repère relatif de chaque véhicule sur les portions de trajectoire sélectionnées.

6. Procédé de correction de la trajectoire d'un véhicule selon la revendication 5, dans lequel la fermeture de boucle est réalisée en prenant en compte, pour chaque portion de trajectoire sélectionnée, des positions et des orientations du véhicule dans un repère relatif qui lui est associé, des transformations de repère du véhicule respectives et des transformations de position d'un élément d'infrastructure relatives aux deux éléments d'infrastructure distincts respectifs et en définissant des contraintes sur les positions des éléments d'infrastructure communs de sorte que deux éléments d'infrastructure croisés par deux véhicules sur deux portions de trajectoire respectives et correspondant à un élément d'infrastructure commun aient la même position.

7. Procédé de correction de la trajectoire d'un véhicule, selon l'une quelconque des revendications 5 ou 6, dans lequel l'algorithme de fermeture de boucle comprend l'implémentation d'un algorithme d'optimisation de graphes et l'étape e) comprend :
- la création d'un graphe (S510) comprenant :
* des premiers noeuds comprenant des poses comprenant des positions et des orientations des véhicules dans leurs repères respectifs sur les portions de trajectoire sélectionnées,
* des premières arrêtes reliant deux premiers noeuds successifs d'un même véhicule et comprenant des transformations de repère du véhicule respectives représentatives d'un changement de position et d'orientation relative du véhicule entre les deux premiers noeuds,
* des seconds noeuds comprenant les positions des éléments d'infrastructure croisés par chaque véhicule sur la portion de trajectoire sélectionnée correspondante dans le repère relatif associé au véhicule, et
* des secondes arrêtes reliant un premier noeud à un second noeud et comprenant des transformations de la position d'un élément d'infrastructure représentatives de la position relative de l'élément d'infrastructure du second noeud par rapport à la position du véhicule du premier noeud, et
* des troisièmes arrêtes reliant deux seconds noeuds correspondant à un élément d'infrastructure commun et définissant une contrainte selon laquelle la position contenue dans ces deux second noeuds doit être la même, et
- l'implémentation de l'algorithme de fermeture de boucle par optimisation de graphe (S520) sur le graphe créé de manière à corriger les positions de chaque véhicule et de chaque élément d'infrastructure dans le repère relatif pour respecter les contraintes sur la position contenue dans les deux seconds noeuds correspondant à un élément d'infrastructure commun définies par les troisièmes arrêtes.

8. Procédé de correction de la trajectoire d'un véhicule, selon l'une quelconque des revendications 5 à 7, dans lequel l'ensemble des étapes d) à e) est réitéré pour des boucles de longueur décroissante.

9. Produit programme d'ordinateur, comprenant des instructions de code pour la mise en oeuvre d'un procédé selon l'une quelconque des revendications 6 à 8, lorsqu'il est mis en oeuvre par un calculateur électronique.

## Patentansprüche

1. Elektronischer Rechner (11), der zur Ausführung eines Verfahrens zur Korrektur des Weges eines Fahrzeugs in einem ihm zugeordneten relativen Bezugssystem ausgestaltet ist, das die folgenden Schritte umfasst:
a) das Empfangen (S100), für eine Mehrzahl von Fahrzeugen:
- von Daten, die für eine Mehrzahl von aufeinander folgenden Positionen eines Fahrzeugs auf seinem Weg umfassen:
* eine Mehrzahl von Bezugssystemtransformationen des Fahrzeugs, die für eine Änderung der Position und relativen Ausrichtung des Fahrzeugs zwischen zwei jeweiligen aufeinander folgenden Positionen repräsentativ sind,
* eine Mehrzahl von Transformationen der Position eines Infrastrukturelements, die für die relative Position eines von dem Fahrzeug überquerten Infrastrukturelements in Bezug auf eine jeweilige Position des Fahrzeugs repräsentativ sind, und
- eine Mehrzahl von absoluten Positionen des Fahrzeugs in einem Koordinatenbezugssystem GNSS, die den aufeinander folgenden Positionen des Fahrzeugs auf seinem Weg entsprechen,
b) das Empfangen (S200), für jedes von einem Fahrzeug überquerte Infrastrukturelement, einer Signatur, die einen Deskriptor des überquerten Infrastrukturelements umfasst,
c) das Identifizieren (S300), ausgehend von den absoluten Positionen jedes Fahrzeugs und von den Signaturen von von jedem Fahrzeug überquerten Infrastrukturelementen, von gemeinsamen Infrastrukturelementen,
d) das Auswählen von Wegabschnitten von mindestens zwei Fahrzeugen (S400), wobei jeder Wegabschnitt durch zwei von einem Fahrzeug überquerte Infrastrukturelemente definiert wird, wobei ein Infrastrukturelement zwei aufeinander folgenden Wegabschnitten gemeinsam ist, die zwei verschiedenen Fahrzeugen entsprechen, so dass eine Schleife gebildet wird, deren Länge größer als eine vorbestimmte Länge ist und für welche die Anzahl von ausgewählten Wegabschnitten minimal ist,
e) das Ausführen eines Schleifenschlussalgorithmus (S500) an der durch die ausgewählten Wegabschnitte gebildeten Schleife, so dass der Weg jedes Fahrzeugs in dem relativen Bezugssystem, das ihm zugeordnet ist, auf den ausgewählten Wegabschnitten korrigiert wird.

2. Rechner (11) nach Anspruch 1, bei dem der Schleifenschluss ausgeführt wird, indem für jeden ausgewählten Wegabschnitt Positionen und Ausrichtungen des Fahrzeugs in einem relativen Bezugssystem, das ihm zugeordnet ist, jeweilige Bezugssystemtransformationen des Fahrzeugs und Transformationen der Position eines Infrastrukturelements bezüglich von zwei jeweiligen verschiedenen Infrastrukturelementen berücksichtigt werden und indem Bedingungen zu den Positionen der gemeinsamen Infrastrukturelemente definiert werden, so dass zwei Infrastrukturelemente, die von zwei Fahrzeugen auf zwei jeweiligen und einem gemeinsamen Infrastrukturelement entsprechenden Wegabschnitten überquert werden, die gleiche Position haben.

3. Rechner (11) nach einem der vorhergehenden Ansprüche, bei dem der Schleifenschlussalgorithmus die Implementierung eines Algorithmus zur Optimierung von Graphen umfasst und der Schritt e) umfasst:
- das Erstellen eines Graphen (S510), umfassend:
* erste Knoten, die Posen umfassen, die Positionen und Ausrichtungen der Fahrzeuge in ihren jeweiligen Bezugssystemen auf den ausgewählten Wegabschnitten umfassen,
* erste Kanten, die zwei aufeinanderfolgende erste Knoten eines selben Fahrzeugs verbinden und jeweilige Bezugssystemtransformationen des Fahrzeugs umfassen, die für eine Änderung der Position und relativen Ausrichtung des Fahrzeugs zwischen den beiden ersten Knoten repräsentativ sind,
* zweite Knoten, die die Positionen der Infrastrukturelemente umfassen, die von jedem Fahrzeug auf dem entsprechenden ausgewählten Wegabschnitt in dem dem Fahrzeug zugeordneten relativen Bezugssystem überquert werden,
* zweite Kanten, die einen ersten Knoten mit einem zweiten Knoten verbinden und Positionstransformationen eines Infrastrukturelements umfassen, die für die relative Position des Infrastrukturelements des zweiten Knotens in Bezug auf die Position des Fahrzeugs des ersten Knotens repräsentativ sind, und
* dritte Kanten, die zwei zweite Knoten verbinden, die einem gemeinsamen Infrastrukturelement entsprechen und eine Bedingung definieren, gemäß der die in diesen beiden zweiten Knoten enthaltene Position die gleiche sein muss, und
- die Implementierung des Schleifenschlussalgorithmus durch Graphoptimierung an dem erstellten Graphen (S520), so dass die Positionen jedes Fahrzeugs und jedes Infrastrukturelements in dem relativen Bezugssystem korrigiert werden zum Erfüllen der Bedingungen für die Position, die in den beiden zweiten Knoten enthalten ist, die einem gemeinsamen Infrastrukturelement entsprechen, die durch die dritten Kanten definiert werden.

4. Rechner (11) nach einem der Ansprüche 1 bis 3, der dazu ausgestaltet ist, sämtliche Schritte d) bis e) für Schleifen mit abnehmender Länge zu wiederholen.

5. Verfahren zur Korrektur des Wegs eines Fahrzeugs in einem ihm zugeordneten relativen Bezugssystem, das von einem elektronischen Rechner ausgeführt wird und umfasst:
a) das Empfangen (S100), für eine Mehrzahl von Fahrzeugen:
- von Daten, die für eine Mehrzahl von aufeinander folgenden Positionen eines Fahrzeugs auf seinem Weg umfassen:
* eine Mehrzahl von Bezugssystemtransformationen des Fahrzeugs, die für eine Änderung der Position und relativen Ausrichtung des Fahrzeugs zwischen zwei jeweiligen aufeinander folgenden Positionen repräsentativ sind,
* eine Mehrzahl von Transformationen der Position eines von dem Fahrzeug überquerten Infrastrukturelements in Bezug auf eine jeweilige Position des Fahrzeugs und
- eine Mehrzahl von absoluten Positionen des Fahrzeugs in einem Koordinatenbezugssystem GNSS, die den aufeinander folgenden Positionen des Fahrzeugs auf seinem Weg entsprechen,
b) das Empfangen (S200), für jedes von einem Fahrzeug überquerte Infrastrukturelement, einer Signatur, die einen Deskriptor des überquerten Infrastrukturelements umfasst,
c) das Identifizieren (S300), ausgehend von den absoluten Positionen jedes Fahrzeugs und von den Signaturen von von jedem Fahrzeug überquerten Infrastrukturelementen, von gemeinsamen Infrastrukturelementen,
d) das Auswählen von Wegabschnitten von mindestens zwei Fahrzeugen (S400), wobei jeder Wegabschnitt durch zwei von einem Fahrzeug überquerte Infrastrukturelemente definiert wird, wobei ein Infrastrukturelement zwei aufeinander folgenden Wegabschnitten gemeinsam ist, die zwei verschiedenen Fahrzeugen entsprechen, so dass eine Schleife gebildet wird, deren Länge größer als eine vorbestimmte Länge ist und für welche die Anzahl von ausgewählten Wegabschnitten minimal ist,
e) das Ausführen eines Schleifenschlussalgorithmus (S500) an der durch die ausgewählten Wegabschnitte gebildeten Schleife, so dass der Weg in dem relativen Bezugssystem jedes Fahrzeugs auf den ausgewählten Wegabschnitten korrigiert wird.

6. Verfahren zur Korrektur des Wegs eines Fahrzeugs nach Anspruch 5, bei dem der Schleifenschluss ausgeführt wird, indem für jeden ausgewählten Wegabschnitt Positionen und Ausrichtungen des Fahrzeugs in einem relativen Bezugssystem, das ihm zugeordnet ist, jeweilige Bezugssystemtransformationen des Fahrzeugs und Positionstransformationen eines Infrastrukturelements bezüglich von zwei jeweiligen verschiedenen Infrastrukturelementen berücksichtigt werden und indem Bedingungen zu den Positionen der gemeinsamen Infrastrukturelemente definiert werden, so dass zwei Infrastrukturelemente, die von zwei Fahrzeugen auf zwei jeweiligen und einem gemeinsamen Infrastrukturelement entsprechenden Wegabschnitten überquert werden, die gleiche Position haben.

7. Verfahren zur Korrektur des Wegs eines Fahrzeugs nach einem der Ansprüche 5 oder 6, bei dem der Schleifenschlussalgorithmus die Implementierung eines Algorithmus zur Optimierung von Graphen umfasst und der Schritt e) umfasst:
- das Erstellen eines Graphen (S510), umfassend:
* erste Knoten, die Posen umfassen, die Positionen und Ausrichtungen der Fahrzeuge in ihren jeweiligen Bezugssystemen auf den ausgewählten Wegabschnitten umfassen,
* erste Kanten, die zwei aufeinanderfolgende erste Knoten eines selben Fahrzeugs verbinden und jeweilige Bezugssystemtransformationen des Fahrzeugs umfassen, die für eine Änderung der Position und relativen Ausrichtung des Fahrzeugs zwischen den beiden ersten Knoten repräsentativ sind,
* zweite Knoten, die die Positionen der Infrastrukturelemente umfassen, die von jedem Fahrzeug auf dem entsprechenden ausgewählten Wegabschnitt in dem dem Fahrzeug zugeordneten relativen Bezugssystem überquert werden, und
* zweite Kanten, die einen ersten Knoten mit einem zweiten Knoten verbinden und Transformationen der Position eines Infrastrukturelements umfassen, die für die relative Position des Infrastrukturelements des zweiten Knotens in Bezug auf die Position des Fahrzeugs des ersten Knotens repräsentativ sind, und
* dritte Kanten, die zwei zweite Knoten verbinden, die einem gemeinsamen Infrastrukturelement entsprechen und eine Bedingung definieren, gemäß der die in diesen beiden zweiten Knoten enthaltene Position die gleiche sein muss, und
- die Implementierung des Schleifenschlussalgorithmus durch Graphoptimierung (S520) an dem erstellten Graphen, so dass die Positionen jedes Fahrzeugs und jedes Infrastrukturelements in dem relativen Bezugssystem korrigiert werden zum Erfüllen der Bedingungen für die Position, die in den beiden zweiten Knoten enthalten ist, die einem gemeinsamen Infrastrukturelement entsprechen, die durch die dritten Kanten definiert werden.

8. Verfahren zur Korrektur des Wegs eines Fahrzeugs nach einem der Ansprüche 5 bis 7, bei dem sämtliche Schritte d) bis e) für Schleifen mit abnehmender Länge wiederholt werden.

9. Computerprogrammprodukt, das Codeanweisungen umfasst, die bei seiner Ausführung durch einen elektronischen Rechner ein Verfahren nach einem der Ansprüche 6 bis 8 ausführen.

## Claims

1. Electronic computer (11) configured to implement a method for correcting the trajectory of a vehicle in a relative reference frame associated therewith and comprising the following steps:
a) receiving (S100), for a plurality of vehicles:
- data comprising, for a plurality of successive positions of a vehicle on its trajectory:
* a plurality of vehicle reference frame transformations representative of a change of position and relative orientation of the vehicle between two respective successive positions,
* a plurality of transformations of the position of an infrastructure element, representative of the relative position of an infrastructure element crossed by the vehicle with respect to a respective position of the vehicle, and
- a plurality of absolute positions of the vehicle in a GNSS coordinate reference frame corresponding to the successive positions of the vehicle on its trajectory,
b) receiving (S200), for each infrastructure element crossed by a vehicle, a signature comprising a descriptor of the crossed infrastructure element,
c) identifying (S300) common infrastructure elements based on the absolute positions of each vehicle and on the signatures of infrastructure elements crossed by each vehicle,
d) selecting trajectory portions of at least two vehicles (S400), each trajectory portion being defined by two infrastructure elements crossed by a vehicle, an infrastructure element being common to two consecutive trajectory portions corresponding to two separate vehicles so as to form a loop having a length greater than a predetermined length and for which the number of selected trajectory portions is at a minimum,
e) implementing a loop closure algorithm (S500) on the loop formed by the selected trajectory portions so as to correct the trajectory of each vehicle in the relative reference frame associated therewith, on the selected trajectory portions.

2. Computer (11) according to Claim 1, wherein the loop closure is carried out taking into account, for each selected trajectory portion, the positions and the orientations of the vehicle in a relative reference frame associated therewith, the respective vehicle reference frame transformations and the transformations of the position of an infrastructure element relative to the two respective separate infrastructure elements and by defining constraints on the positions of the common infrastructure elements such that two infrastructure elements crossed by two vehicles on two respective trajectory portions and corresponding to a common infrastructure element have the same position.

3. Computer (11) according to either one of the preceding claims, wherein the loop closure algorithm comprises implementing a graph optimization algorithm and step e) comprises:
- creating a graph (S510) comprising:
* first nodes comprising poses comprising positions and orientations of the vehicles in their respective reference frames on the selected trajectory portions,
* first edges connecting two successive first nodes of one of the same vehicle and comprising respective vehicle reference frame transformations representative of a change of position and relative orientation of the vehicle between the two first nodes,
* second nodes comprising the positions of the infrastructure elements crossed by each vehicle on the corresponding selected trajectory portion in the relative reference frame associated with the vehicle,
* second edges connecting a first node to a second node and comprising infrastructure element position transformations representative of the relative position of the infrastructure element of the second node with respect to the position of the vehicle of the first node, and
* third edges connecting two second nodes corresponding to a common infrastructure element and defining a constraint according to which the position contained in these two second nodes must be the same, and
- implementing the loop closure algorithm by way of graph optimization on the created graph (S520) so as to correct the positions of each vehicle and of each infrastructure element in the relative reference frame so as to comply with the constraints on the position contained in the two second nodes corresponding to a common infrastructure element defined by the third edges.

4. Computer (11) according to any one of Claims 1 to 3, configured to reiterate the set of steps d) to e) for loops of decreasing length.

5. Method for correcting the trajectory of a vehicle in a relative reference frame associated therewith, implemented by an electronic computer and comprising:
a) receiving (S100), for a plurality of vehicles:
- data comprising, for a plurality of successive positions of a vehicle on its trajectory:
* a plurality of vehicle reference frame transformations representative of a change of position and relative orientation of the vehicle between two respective successive positions,
* a plurality of transformations of the position of an infrastructure element crossed by the vehicle with respect to a respective position of the vehicle, and
- a plurality of absolute positions of the vehicle in a GNSS coordinate reference frame corresponding to the successive positions of the vehicle on its trajectory,
b) receiving (S200), for each infrastructure element crossed by a vehicle, a signature comprising a descriptor of the crossed infrastructure element,
c) identifying (S300) common infrastructure elements based on the absolute positions of each vehicle and on the signatures of infrastructure elements crossed by each vehicle,
d) selecting trajectory portions of at least two vehicles (S400), each trajectory portion being defined by two infrastructure elements crossed by a vehicle, an infrastructure element being common to two consecutive trajectory portions corresponding to two separate vehicles so as to form a loop having a length greater than a predetermined length and for which the number of selected trajectory portions is at a minimum,
e) implementing a loop closure algorithm (S500) on the loop formed by the selected trajectory portions so as to correct the trajectory in the relative reference frame of each vehicle on the selected trajectory portions.

6. Method for correcting the trajectory of a vehicle according to Claim 5, wherein the loop closure is carried out taking into account, for each selected trajectory portion, the positions and the orientations of the vehicle in a relative reference frame associated therewith, the respective vehicle reference frame transformations and the position transformations of an infrastructure element relative to the two respective separate infrastructure elements and by defining constraints on the positions of the common infrastructure elements such that two infrastructure elements crossed by two vehicles on two respective trajectory portions and corresponding to a common infrastructure element have the same position.

7. Method for correcting the trajectory of a vehicle according to either one of Claims 5 and 6, wherein the loop closure algorithm comprises implementing a graph optimization algorithm and step e) comprises:
- creating a graph (S510) comprising:
* first nodes comprising poses comprising positions and orientations of the vehicles in their respective reference frames on the selected trajectory portions,
* first edges connecting two successive first nodes of one of the same vehicle and comprising respective vehicle reference frame transformations representative of a change of position and relative orientation of the vehicle between the two first nodes,
* second nodes comprising the positions of the infrastructure elements crossed by each vehicle on the corresponding selected trajectory portion in the relative reference frame associated with the vehicle, and
* second edges connecting a first node to a second node and comprising infrastructure element position transformations representative of the relative position of the infrastructure element of the second node with respect to the position of the vehicle of the first node, and
* third edges connecting two second nodes corresponding to a common infrastructure element and defining a constraint according to which the position contained in these two second nodes must be the same, and
- implementing the loop closure algorithm by way of graph optimization (S520) on the created graph so as to correct the positions of each vehicle and of each infrastructure element in the relative reference frame so as to comply with the constraints on the position contained in the two second nodes corresponding to a common infrastructure element defined by the third edges.

8. Method for correcting the trajectory of a vehicle according to any one of Claims 5 to 7, wherein the set of steps d) to e) is reiterated for loops of decreasing length.

9. Computer program product comprising code instructions for implementing a method according to any one of Claims 6 to 8 when it is implemented by an electronic computer.
